# EUROPEAN PATENT SPECIFICATION

(11) **EP 0 746 459 B1**
(45) Date of publication and mention of the grant of the patent: **14.06.2000**
(21) Application number: 95909050.7
(22) Date of filing: 24.02.1995
(51) Int. Cl.: B29D 11/00, B24B 13/005

(54) **PROCESS OF PREPARING LENSES**
VERFAHREN ZUR HERSTELLUNG VON LINSEN
PROCEDE DE PREPARATION DE VERRES DE CONTACT

(30) Priority: 04.03.1994 GB 9404170
(43) Date of publication of application: 11.12.1996
(73) Proprietor: Hydron Limited, Farnborough, Hants GU14 8EQ (GB)
(72) Inventor: TOMNEY, John, Fleet Hampshire EU13 0HL (GB); SIDHU, Jotinderpal, Singh, Middlesex UB10 0AH (GB)
(74) Representative: Harding, Charles Thomas
(86) International application number: GB9500390
(87) International publication number: WO9523684

(56) References cited:
- WO-A-92/08614
- GB-A- 2 017 546
- US-A- 4 328 060
- PATENT ABSTRACTS OF JAPAN vol. 015 no. 252 (C-0844) ,26 June 1991 & JP,A,03 081385 (KURARAY CO LTD) 5 April 1991,
- DATABASE WPI Week 9508 Derwent Publications Ltd., London, GB; AN 95-057426 'cleaning composition for cleaning lenses and prisms' & JP,A,06 336 599 (OLYMPUS OPTICAL CO.LTD.) , 6 December 1994
- PATENT ABSTRACTS OF JAPAN vol. 004 no. 187 (M-048) ,23 December 1980 & JP,A,55 133929 (HOYA CORP) 18 October 1980,

## Description

The present invention relates to a process of preparing lenses.

In particular the present invention relates to a process of preparing lenses, such as contact lenses, by a new de-blocking process.

In the following description, the term "lens" or "lenses" shall include contact lens(es) and intra-ocular lens(es) (IOL's).

Typically, a lens is prepared by taking a blank, usually a button of for example a polymer of polymerised ethylenically unsaturated monomers - such as methacrylic acid and 2-ethylhexylacrylic acid - and then cutting by suitable means (collectively hereinafter referred to as "lathing") one side of the blank to form a desired concave surface. The concave surface is then mounted on a supporting stud (sometimes referred to as an "arbor") via an intermediate layer of wax - commonly known as a "blocking wax". The other side of the blank is then lathed to form, for example, a desired convex surface.

In order to prepare the lenses for packaging and subsequent use they must removed from the wax mounts. This removal step is called "de-blocking".

Various ways have been tried to remove the lenses from their wax mounts. For example, freeze-drying techniques and the use of a razor blade to cut the lens from the wax have been tried - but each of methods is undesirable as the lathed lenses are often damaged. Accordingly, most (if not all) manufacturers of lenses use chlorinated/fluorinated hydrocarbons (CHC's and CFC's) or petroleum solvents (such as Pet-ether) to clean and to remove the lathed lens from the stud. The most widely used solvent for the deblocking step is 1,1,2 trichloro, 2,2,1 trifluoro ethane - which is commonly known as "Arklone P". In these prior art de-blocking processes, which include the use of both heat and ultrasound, the solvent completely dissolves the blocking wax, thus completely freeing the lens from its mount.

There are, however, a number of problems associated with the prior art de-blocking process.

In this regard, the prior art process uses solvents that are environmentally hazardous - such as the CHC's and CFC's (see the Montreal Protocol). The prior art solvents are expensive to use.

Furthermore, the prior art solvents are very volatile and are therefore not easily recyclable. Also the process reduces the wax to a sludge which forms at the bottom of the tank holding the solvent. The amount of sludge formation depends on the solvent, the type of wax used to mount the lens on the stud, the type of wax modifiers (e.g. polish) and the amount of polish remaining on the lens. This sludge formation leads to extra costs as the tanks have to be cleaned on a regular basis.

In addition to these problems, the prior art de-blocking step also takes a long time, usually in the order of from four to ten minutes. This long time frame and the above-mentioned problems restrict the automation of the prior art process.

Two further problems with the prior art process are associated with the fact that the de-blocked lenses float on the surface of the solvent.

Firstly, the de-blocked lenses can be damaged by contacting, for example, the sides of the tank. They can even be damaged when they are collected by use of scoops or sieves.

Secondly, it is usual in preparing a large numbers of lenses to mount the studs on a holder. Accordingly, if at least one of the mounted lenses were different from the others (e.g. a different refractive index), there would be no way of telling, apart from a time consuming inspection process, which of the freely floating lenses is which once the de-blocking step had occurred - unless the lenses were coloured according to type which is a rare event.

WO 92/0614 discloses a hot melt adhesive suitable for binding ophthalmic lenses to metal blocks during grinding processes. According to this document, the wax exhibits a low melt viscosity and may be mechanically removed from the lens without leaving significant residue. In other words, the wax does not remain associated with the lens on removal from the mount.

JP 03-081385 discloses the bonding and separating of a contact lens material and its support by bonding them with a molten polyethylene glycol. The document discloses that, if necessary, the fixed lens material and support may be immersed in an aqueous solvent to separate them from each other.

JP 63-36599 discloses a cleaning composition comprising at least one cyclic terpene and at least one solvent of isoparaffin and naphthene type solvents at a given ratio. It is taught that the cleaning composition has high detergency against pitches, resins and waxes and may be used for cleaning optical lenses and prisms.

The present invention seeks to overcome the many problems associated with the prior art process of preparing a lens.

According to the present invention there is provided a process of preparing a lens comprising a de-blocking step to remove the lens from a wax mount wherein the de-blocking step comprises a) partially dissolving the wax mount so that the lens remains associated with the wax mount but can be removed therefrom; and then b) physically removing the lens from the partially dissolved wax mount.

According to a highly preferred embodiment of the present invention there is provided a process of preparing a lens comprising a de-blocking step to remove the lens from a wax mount wherein the wax is treated with a low volatile hydrocarbon under conditions of agitation to dissolve partially the wax mount so that the lens remains associated with the wax mount but can be removed therefrom, and then physically removing the lens from the partially dissolved wax mount.

The term "partially dissolved" means that not all of the wax is dissolved or degraded. Instead, only some of the wax is dissolved or degraded and to such an extent that the lens is still associated with the wax on the stud but wherein the lens can be easily removed therefrom such as, by way of example, picking off the lens by hand or by suction. It is believed that the partial dissolving of the wax lowers or relieves the surface adhesion or tension between the lens and the wax by breaking down the surface layer of the wax exposed to the lens on a macromolecular level but to such an extent that the lens is still associated with the wax on the stud but wherein the lens can be easily removed therefrom.

The partial dissolving aspect of the de-blocking step of the present invention is in contrast to the afore-mentioned prior art de-blocking process wherein the wax is totally dissolved or degraded so that the lens dissociates completely from its wax mount on the stud.

The term "treated" includes contacting the wax mount wit a low volatile hydrocarbon (e.g. terpene) such as dipping the wax mount(s) into a bath of the low volatile hydrocarbon held for example in an ultrasonic tank.

The term "low volatile hydrocarbon" preferably covers any suitable hydrocarbon having an evaporation rate of less than 1 (when ether = 1), more preferably an evaporation rate of less than 0.1 (when ether = 1); and/or a boiling point of at least 100 degrees C (at standard pressure), more preferably a boiling point of at least 130 degrees C (at standard pressure).

These characteristics are in contrast to those for the prior an de-blocking solvents such as Arklone P and Pet ether which both have an evaporation rate of about 1.9 (when ether = 1) and which have boiling points of 48 degrees C (at standard pressure) and 60-83 degrees C (at standard pressure) respectively.

Examples of suitable low volatile hydrocarbons for the present invention include kerosene and terpene. The low volatile hydrocarbon can be a mixture/blend of low volatile hydrocarbons. Preferably, the low volatile hydrocarbon is or contains terpene. Preferably the low volatile hydrocarbon is terpene, more preferably (+) limonene.

Examples of suitable commercially available low volatile hydrocarbons for use in the present invention include CITROCLEAR™ (which is mainly pure (+) limonene - sold by HD Supplies), DE.SOLV.IT.™ 1000 (B,C) (a blend of (+) limonene and technical white oil - sold by J. Manger & Son), ODOURLESS KEROSINE (sold by Carless Refining & Marketing Limited), ODOURLESS KEROSENE (sold by Samuel Banner & Co. Limited), SOLBAN 40 (which is kerosene based - sold by Samuel Banner & Co. Limited) and SOLBAN 45 (which is kerosene based - sold by Samuel Banner & Co. Limited).

Preferably the low volatile hydrocarbon is used in conjunction with a dearomatised hydrocarbon - such as a blend of (+) limonene and technical white oil.

The term "dearomatised hydrocarbon" covers any suitable hydrocarbon that does not contain any aromatic groups. The dearomatised hydrocarbon improves the propenies of the de-blocking agent such as increasing the flash point of the low volatile hydrocarbon. Likewise, the dearomatised hydrocarbon should have low volatility (as hereinbefore defined). A suitable example of a dearomatised hydrocarbon is Shellsol™ D70 (Shellsol, which has an evaporation rate of 0.01, is sold by Shell Industrial Chemicals).

The de-blocking agent of the present invention can be made up entirely of the low volatile hydrocarbon, such as (+) limonene. However, the de-blocking agent may contain from 20 to less than 100% of the low volatile hydrocarbon and from more than 0 to 80% of the dearomatised hydrocarbon.

Preferably, the de-blocking agent contains from 20 to 60% of the low volatile hydrocarbon and from more 40 to 80% of the dearomatised hydrocarbon. A highly preferred de-blocking agent is a blend of (+) limonene and technical white oil, such as DE.SOLV.IT.™ 1000 (B,C) (J. Manger & Son).

The conditions of agitation can be achieved by the use of any suitable agitating means such as, by way of example, a high pressure jet or an ultrasonic tank.

Preferably the wax mount is agitated by means of an ultrasonic tank. Preferably the operating frequency of the ultrasonic tank is between about 15 and 80 KHz, preferably from 25 to 60 KHz. In a preferred embodiment, during the agitation there is a frequency sweep from 15 to 80 KHz, preferably from 25 to 60 KHz. The ultrasonic generator may be modulated at full wave length or half wavelength.

Preferably the wax is treated for a time period of less than a minute - such as less than 30 seconds, preferably less then 15 seconds.

Preferably a plurality of lenses, preferably at least six, are exposed simultaneously to the de-blocking step.

Preferably the de-blocking step is automated.

Preferably the lens is a contact lens.

The wax may be a beeswax or paraffin wax or a mixture thereof.

If the low volatile hydrocarbon comprises a terpene, preferably the terpene is a natural terpene. Preferably the terpene is isolatable from the fruit of the orange tree. Preferably the terpene is a monoterpene. Preferably the terpene is limonene. Preferably the limonene is (+) limonene.

In accordance with standard chemical knowledge, such as the teachings of Introduction To Organic Chemistry by Streitwieser and Heathcock (published by Collier MacMillan Publishers), terpenes are a class of organic compounds that are the most abundant components of the essential oils of many plants and flowers. Terpenes can be isolated from plants and the like. They may even be prepared in the laboratory. Generally, terpenes are biosynthesized from acetic acid by way of isopentenyl pyrophosphate and may be dissected into "isoprene units". Compounds constructed from two isoprene units are monoterpenes, C₁₀ compounds. Compounds built up from three isoprene units are sesquiterpenes, C₁₅ compounds. Diterpenes, C₂₀ compounds, consist of four isoprene units. Examples of polyterpenes are natural rubber and gutta percha. A number of terpenes are open chain systems - such as geraniol, citonellal. Terpenes can even be cyclic such as the monocyclic menthol or zingiberene, or the bicyclic beta-santalol or beta-cadinene, or the tricyclic matricarin, or the polycyclic copaene.

In the present invention a highly preferred terpene is a monoterpene, more preferably limonene, most preferably (+)-limonene.

There are a number of advantages associated with the present invention.

One main advantage is that in the de-blocking step of present invention, each lens remains associated with the stud and so the possibility of damage to the lens is greatly reduced. Also, as the lens remains associated with the treated wax, so more than one type of lens may be de-blocked at the same time. In this regard, each mount can be coded and so an operator can tell automatically which lens is which. These aspects of the present invention make the present de-blocking step more amenable to automation.

Other advantages, and with particular reference to the highly preferred embodiment, are that the process uses a natural solvent that is not hazardous to the environment, health and safety. Furthermore, the solvent is not volatile and is relatively inflammable. Another advantage is that the solvent is much cheaper to use. The solvent may even be re-cycled as the dissolved wax can be easily separated from the terpene by, for example, fractional distillation. The solvent may also be used as a common de-blocking agent for a large number of wax types.

In addition, the time scale of the de-blocking step of the present invention is relatively much shorter than the prior art de-blocking process. In this regard, it is usually less than 1 minute and is typically in the order of ten seconds. However, the time scale is largely dependent on the degree of agitation. This shorter time scale means that the process of the present invention is even more amenable to automation. Another key advantage is that the present process can be conducted at room-temperature. Hence there is no requirement for a heat supply - thus reducing even further the costs of preparing a lens. Also use of the terpene does not damage the lens or even the stud. The use of terpene is especially suited for the pharmaceutical industry because of its natural occurrence.

Some of the main advantages associated with the use of (+)-limonene as the highly preferred solvent are that it is non-toxic, environmentally safe, and cheap. (+ )-Limonene is also a naturally occurring solvent which occurs in various ethereal oils, particularly in oils of citric fruits, caraway, dill and bergamot and is therefore readily available.

Its other advantages are that it is not a CHC solvent, it is not a CFC solvent and it is not petroleum based.

It is also biodegradable and therefore easily disposed. It has a low volatility, vapour pressure and evaporation rate and as a result of these factors its usage is very low. Typically its usage is in the order of approximately 10% of that of conventional CFC usage.

In our studies we noted that limonene could not be used as an effective substitute for Arklone P in the de-blocking process of the prior an. In this regard, after the wax mounted lenses had been exposed to limonene and heat for up to 10 minutes the wax often formed a sticky mass on the stud and in some cases even lead to a greater adhesion of the lenses to their mounts. Also, when the lenses did fully dissociate from their mounts, they did not float on the limonene. Instead, they sank to the bottom of the tank holding the limonene. Hence, the tank holding the studs had to be tipped up to remove the limonene in order to allow an operator to retrieve the prepared lenses. Clearly, if this were the only way to prepare lenses using limonene it would be commercially unacceptable. However, and as it is made clear above, the process of the present invention even overcomes these problems.

In general therefore the preferred embodiment of the present invention relates to the use of a low volatile hydrocarbon, preferably a terpene, as a de-blocking agent. In this process the mounted lenses are treated (e.g. contacted) with the hydrocarbon (e.g. terpene) under conditions of agitation for a very short period of time - for example 10 seconds though this is dependent on the extent of agitation and the size (e.g. diameter) of the stud. The de-blocking step of the present process can be carried out at room temperature.

In the process according to the present invention the terpene only partially dissolves the wax so that the lenses remain associated with the stud. After the contacting step the lenses can be easily removed from their mounts - such as by hand. If any of the lenses should become dissociated during the de-blocking step then they can be easily retrieved - such as by a simple filtration process. The essential characteristic of this aspect of the present invention is the partial dissolution of the wax. This is achieved by exposing the wax on the stud to short periods of agitation.

We have even found tat the lenses when mounted on the studs via the wax can remain in a bat of terpene in the absence of agitation for even up to twelve hours and the lenses will not dissociate completely from their mounts. This is advantageous as the mounted lenses can be exposed to the terpene and the agitating means, such as an ultrasonic bath, for the requisite time and ten the mounted lenses can be removed from the ultrasonic bath or the ultrasonic generating means can be turned off and the mounted lenses can be left to stand in the terpene for a certain period of time to allow the terpene to act then as a cleaning solvent to clean the lenses. Storage in the low volatile hydrocarbon (e.g. terpene) will also prevent the lenses from hydrating.

Other advantages of this preferred embodiment are that it uses a relatively non-volatile solvent that can be recycled - thus leading to substantial cost reductions; as the lenses remain mounted on the studs an operator knows which lens is which and also the chances of damaging the lenses are minimalised; and the process lends itself well to automation. The terpene is a good solvent because it dissolves the wax and because it is easily filtered to remove debris such as the polishing agents that may be present in the wax. Even when it contains a substantial level of dissolved wax, the limonene still acts as a good de-blocking agent.

Other embodiments and advantages will become apparent in the light of the following description.

The present invention will now be described only by way of example in which reference shall be made to the following Figures:
Figure 1 is a cross-sectional view of a lens mounted on a stud via an intermediate wax layer (which has been enlarged);
Figure 2 is a pictorial representation (not to scale) of a series of studs shown in Figure 1 mounted in a holder;
Figure 3 is a cross-sectional view of an ultrasonic tank containing an ultrasonic fluid;
Figure 4 is a cross-sectional view of the ultrasonic tank of Figure 3 with a further tank; and
Figure 5 is a cross-sectional view of the tank of Figure 4 with a sieve.

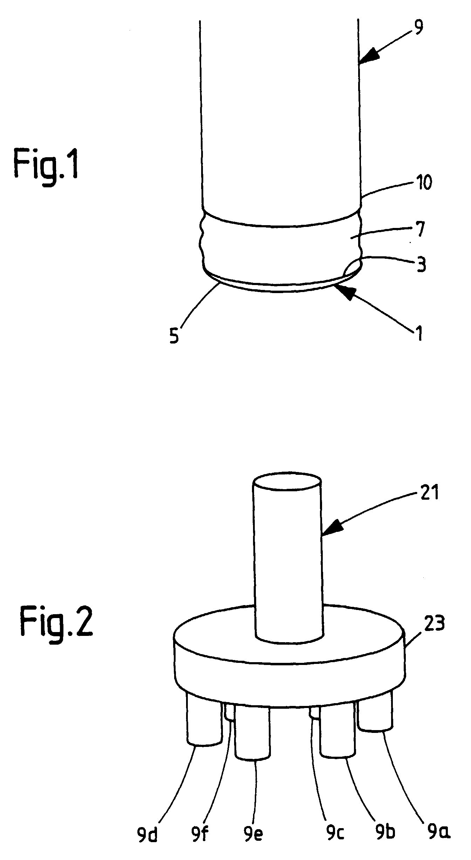

Figure 1 shows a lens 1 having a concave surface 3 and a convex surface 5 mounted on a wax layer 7. The wax layer 7 in turn is mounted on a stud 9, such as a magnetic metal stud. For contact lens preparation the studs generally have an outside diameter of less than about 15 mm, such as from about 5 mm to about 14 mm, typically 9.5 mm or 11 mm. For IOL preparation the studs generally have an outside diameter of less than about 8 mm, typically about 4 mm. However, any suitably sized stud may be chosen.

The lens 1 is prepared by first lathing a polymer blank (not shown) to form the concave surface 3. The concave surface 3 is then mounted on the wax layer 7 which in turn is mounted on the stud 9. The surface of the blank distanced away from the wax layer 7 is then lathed to form convex surface 5.

In the preferred embodiment shown in Figure 2 a plurality of studs, in this case six studs 9a-9f, are mounted on to the underneath surface of a disk 23 of a holder 21. The studs 9a-9f are releasably connected to the disk 23 such as, by way of example, magnets (not shown). In this preferred embodiment many (e.g. six) lenses can be prepared at the same time.

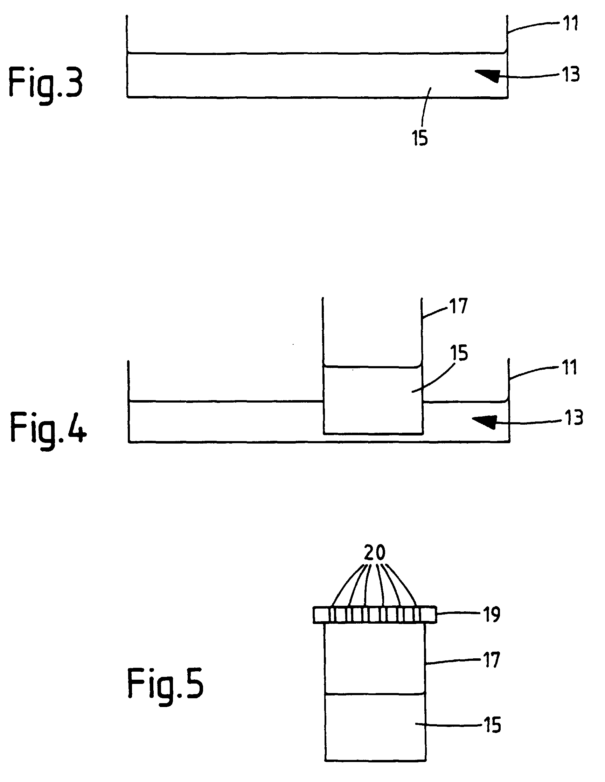

One way to remove the lens 1 from its wax layer 7 uses the apparatus shown in Figure 3 which comprises an ultrasonic tank 11 containing an ultrasonic fluid 13. A typical example of an ultrasonic tank is sold by Crest Ultrasonics (e.g. tank model number XHT 1014-6 and ultrasonic generator model number XG 500-6).

In the highly preferred embodiment of the present invention the ultrasonic fluid 13 contains a terpene 15, preferably (+) limonene, more preferably DE.SOLV.IT.™ 1000 (B,C) (a blend of (+) limonene and technical white oil - sold by J. Manger & Son).

In the deblocking step according to the present invention the mounted lens 1 of Figure 1 is lowered into the ultrasonic tank 11 until the lens 1 and at least part of the wax layer 7 are submerged under the terpene 15. Preferably all of the wax layer 7 is submerged. Preferably the lens 1 is placed close to the bottom of the ultrasonic tank 11 thereby ensuring that the wax layer 7 will experience the maximum degree of agitation.

The lens 1 and the wax layer 7 are then subjected to a short period of agitation between the frequencies of 25 to 60 KHz (preferably in a sweep format) - such as for example about 10 seconds - during which time some but not all of the wax layer 7 dissolves - thereby allowing the lens 1 to be removed easily from the wax layer 7 at an appropriate moment. After this short period of agitation the agitation is switched off and the mounted lens 1 can then be then taken out of the terpene 15 at a suitable moment. Alternatively the mounted lens 1 need only be taken out of the terpene 15 after the short period of time. The mounted lens 1 can then be easily prised away from the wax layer 7 such as for example by hand or suction (not shown). It is observed that the surface of the wax left on the stud is pitted - indicating partial dissolution of the wax layer. The removed lens can then be cleaned to remove any residual wax.

Another way to remove the lens 1 from its wax layer 7 uses the apparatus shown in Figure 4 which comprises an ultrasonic tank 11 containing an ultrasonic fluid 13 and a rank 17. The tank 17 can sit on the bottom of the ultrasonic tank 11 or it can be mounted providing at least a portion of the tank 17 is submerged in the ultrasonic fluid 13 (as shown in Figure 4). The tank 17 contains terpene 15, preferably (+) limonene. As with the apparatus of Figure 3, in the deblocking step according to the present invention the mounted lens 1 of Figure 1 is lowered into the tank 17 until the lens 1 and at least part of the wax layer 7 are submerged under the terpene 15. Preferably all of the wax layer 7 is submerged.

The lens 1 and the wax layer 7 are then subjected to a short period of agitation - such as for example about 10 seconds - during which time some but not all of the wax layer 7 dissolves -thereby allowing the lens 1 to be removed easily from the wax layer 7 at an appropriate moment. After this short period of agitation the agitation is switched off and the mounted lens 1 can then be taken out of the terpene 15 at a suitable moment.

Alternatively the mounted lens 1 need only be taken out of the terpene 15 after the short period of time.

The mounted lens 1 can then be easily prised away from the wax layer 7 such as for example by hand or suction (not shown).

In the event that a lens 1 should become completely dissociated from the wax layer 7 during the deblocking step using the apparatus of Figure 4 then that lens can be retrieved simply by holding a sieve 19 containing holes 20 over the top of the tank 17 (as shown in Figure 5) and then upturning the tank 17 to drain out the terpene 15. The lens 1 can then be retrieved.

Other modifications within the scope of the present invention will be apparent to those skilled in the art.

## Claims

1. A process of preparing a lens (1) comprising a de-blocking step to remove the lens from a wax mount (7) wherein the de-blocking step comprises a) partially dissolving the wax mount so that the lens remains associated with the wax mount but can be removed therefrom; and then b) physically removing the lens from the partially dissolved wax mount.

2. A process according to claim 1 wherein the wax mount (7) is treated with a low volatile hydrocarbon (15) under conditions of agitation to dissolve partially the wax mount so that the lens (1) remains associated with the wax mount but can be removed therefrom.

3. A process according to claim 2 wherein the low volatile hydrocarbon (15) comprises a terpene.

4. A process according to claim 3 wherein the terpene (15) is a natural terpene.

5. A process according to claim 4 wherein the terpene (15) is isolatable from the fruit of the orange tree.

6. A process according to any one of claims 3 to 5 wherein the terpene (15) is a monoterpene.

7. A process according to claim 6 wherein the terpene (15) is limonene.

8. A process according to claim 7 wherein the limonene (15) is (+) limonene.

9. A process according to any one of claims 1 to 7 wherein the low volatile hydrocarbon (15) is used in conjunction with a dearomatised hydrocarbon.

10. A process according to any one of claims 2 to 9 wherein the wax mount (7) is agitated by means of an ultrasonic tank (11).

11. A process according to any one of claims 2 to 10 wherein the wax (7) is treated for a time period of less than a minute.

12. A process according to any one of claims 1 to 11 wherein a plurality of lenses (1), preferably at least six, are exposed simultaneously to the de-blocking step.

13. A process according to any one of claims 1 to 12 wherein the de-blocking step is automated.

14. A process according to any one of claims 1 to 13 wherein the lens (1) is a contact lens.

## Patentansprüche

1. Verfahren zur Herstellung einer Linse (1) mit einer Entblockierstufe zur Entfernung der Linse von einer Wachshalterung (7), wobei die Entblockierstufe umfaßt, daß man a) die Wachshalterung derart teilweise auflöst, daß die Linse mit der Wachshalterung verbunden bleibt, aber von ihr entfernt werden kann und dann b) die Linse physikalisch von der teilweise gelösten Wachshalterung entfernt.

2. Verfahren nach Anspruch 1, bei dem die Wachshalterung (7) mit einem wenig flüchtigen Kohlenwasserstoff (15) unter Rührbedingungen behandelt wird, um die Wachshalterung teilweise aufzulösen, so daß die Linse (1) mit der Wachshalterung verbunden bleibt, aber von ihr entfernt werden kann.

3. Verfahren nach Anspruch 2, bei dem der wenig flüchtige Kohlenwasserstoff (15) ein Terpen umfaßt.

4. Verfahren nach Anspruch 3, bei dem das Terpen (15) ein natürliches Terpen ist.

5. Verfahren nach Anspruch 4, bei dem das Terpen (15) aus der Frucht des Orangenbaumes isolierbar ist.

6. Verfahren nach einem der Ansprüche 3 bis 5, bei dem das Terpen (15) ein Monoterpen ist.

7. Verfahren nach Anspruch 6, bei dem das Terpen (15) Limonen ist.

8. Verfahren nach Anspruch 7, bei dem das Limonen (15) (+)-Limonen ist.

9. Verfahren nach einem der Ansprüche 1 bis 7, bei dem der wenig flüchtige Kohlenwasserstoff (15) in Verbindung mit einem dearomatisierten Kohlenwasserstoff verwendet wird.

10. Verfahren nach einem der Ansprüche 2 bis 9, bei dem die Wachshalterung (7) mit Hilfe eines Ultraschallbehälters (11) gerührt wird.

11. Verfahren nach einem der Ansprüche 2 bis 10, bei dem das Wachs (7) während einer Zeitdauer von weniger als einer Minute behandelt wird.

12. Verfahren nach einem der Ansprüche 1 bis 11, bei dem mehrere Linsen (1), vorzugsweise wenigstens sechs, gleichzeitig der Entblockierstufe unterzogen werden.

13. Verfahren nach einem der Ansprüche 1 bis 12, bei dem die Entblockierstufe automatisiert ist.

14. Verfahren nach einem der Ansprüche 1 bis 13, bei dem die Linse (1) eine Kontaktlinse ist.

## Revendications

1. Procédé pour la préparation d'une lentille (1) comprenant une étape de déblocage pour séparer la lentille d'une monture en cire (7), dans lequel l'étape de déblocage comprend les étapes consistant a) à dissoudre partiellement la monture en cire de telle sorte que la lentille reste associée à la monture en cire mais puisse en être séparée ; et ensuite b) à séparer physiquement la lentille de la monture en cire partiellement dissoute.

2. Procédé suivant la revendication 1, dans lequel la monture en cire (7) est traitée avec un hydrocarbure faiblement volatil (15) dans des conditions d'agitation pour dissoudre partiellement la monture en cire de telle sorte que la lentille (1) reste associée à la monture en cire mais puisse être séparée de cette monture.

3. Procédé suivant la revendication 2, dans lequel l'hydrocarbure faiblement volatil (15) comprend un terpène.

4. Procédé suivant la revendication 3, dans lequel le terpène (15) est un terpène naturel.

5. Procédé suivant la revendication 4, dans lequel le terpène (15) peut être extrait du fruit de l'oranger.

6. Procédé suivant l'une quelconque des revendications 3 à 5, dans lequel le terpène (15) est un monoterpène.

7. Procédé suivant la revendication 6, dans lequel le terpène (15) est le limonène.

8. Procédé suivant la revendication 7, dans lequel le limonène (15) est le (+) limonène.

9. Procédé suivant l'une quelconque des revendications 1 à 7, dans lequel l'hydrocarbure faiblement volatil (15) est utilisé conjointement avec un hydrocarbure désaromatisé.

10. Procédé suivant l'une quelconque des revendications 2 à 9, dans lequel la monture en cire (7) est agitée au moyen d'un réservoir ultrasonique (11).

11. Procédé suivant l'une quelconque des revendications 2 à 10, dans lequel la cire (7) est traitée pendant une période de temps inférieure à une minute.

12. Procédé suivant l'une quelconque des revendications 1 à 11, dans lequel une pluralité de lentilles (1), de préférence en un nombre au moins égal à 6, est exposée simultanément à l'étape de déblocage.

13. Procédé suivant l'une quelconque des revendications 1 à 12, dans lequel l'étape de déblocage est automatisée.

14. Procédé suivant l'une quelconque des revendications 1 à 13, dans lequel la lentille (1) est une lentille de contact.
